# EUROPEAN PATENT SPECIFICATION

(11) **EP 0 588 935 B1**
(45) Date of publication and mention of the grant of the patent: **15.11.1995**
(21) Application number: 92913601.8
(22) Date of filing: 27.04.1992
(51) Int. Cl.: C09J 7/02

(54) **AN ADHESIVELY APPLIABLE FLEXIBLE FILM**
DURCH KLEBSTOFF AUFTRAGBARER BIEGSAMER FILM
FEUILLE SOUPLE A APPLICATION PAR ADHERENCE

(30) Priority: 14.06.1991 US 715789
(43) Date of publication of application: 30.03.1994
(73) Proprietor: MINNESOTA MINING AND MANUFACTURING COMPANY, St. Paul, Minnesota 55133-3427 (US)
(72) Inventor: HANSON, Eric, J., Saint Paul, MN 55133-3427 (US); JOHANNSEN, Heiner, Saint Paul, MN 55133-3427 (US); THERY, Ronald, K., Saint Paul, MN 55133-3427 (US)
(74) Representative: Baillie, Iain Cameron
(86) International application number: US9203342
(87) International publication number: WO9222619

(56) References cited:
- FR-A- 2 404 039
- US-A- 3 483 018

## Description

### BACKGROUND OF THE INVENTION

### 1. Field of the Invention

The present invention relates to adhesively appliable films for use on soft and/or flexible surfaces. The films are flexible and display resistance to separation from the surface to which they are applied. These films may also display dirt repellency and may provide a protective or decorative covering for outdoor applications.

### 2. Background of the Art

It is often desirable to apply markings or protective coatings to surfaces. These markings or coatings cannot usually be applied during commercial manufacture of the article since the ultimate user may desire specific markings or colors on the surface. For example, in manufacturing doors, curtains, panels, shades, awnings, covering fabrics, plastic sheeting, jackets, tents, canvas siding on trucks (e.g., fabric or scrim coated with soft polyvinyl chloride), and the like, specific markings are often desired by the final purchasers. Those colors or markings cannot always be anticipated during manufacture.

Typically, colors or markings have been applied by the end user or by an independent contractor. The applications have been made by coating (e.g., dye-coating), printing (including silk screening), painting (by spray, roller or brush), applying decals, applying rigid panels, embroidery, and the like. Each of these different types of application methods has its own benefits and drawbacks. Each process has tended to accordingly find its own niche in the marketplace.

One technical area in which the user requirements have been difficult to meet is the application of markings or coatings to flexible surfaces, particularly monomerically plasticized flexible surfaces that are subjected to ambient outdoor conditions. This use has a large number of difficult requirements to meet. Not the least of these requirements that must be met are resistance to weathering (light, hot and cold cycles, moisture, humidity, and dryness), resistance to flex induced cracking, and dirt resistance. The coating or covering must be insensitive to any plasticizers in the flexible surface. It is, of course, desirable that these requirements be met by an easily applied material.

It has recently been commercially attempted to apply flexible sheets of marking materials to curtains or soft coverings (e.g., these are called "canvas siding" but usually comprise polymeric materials such as polyvinyl chloride) for commercial trucks. One system, known as the HOTMARK™ cover films with fusion adhesives applies a flexible vinyl film to the curtain by using a thermally activatable adhesive. Application by thermal heating is not easily made uniform and can be subject to bubbling. Vinyl films also tend not to perform as well as many other materials and are readily subject to inelastic elongation. Another system uses a pressure-sensitive adhesive system on a flexible film. This system is known as the FASFLEX™ Series 2000 film for tarpaulins. The application of the FASFLEX™ decal materials is not simple and has dirt pick-up problems. Soap and water are used as an application aid to allow the product to be repositionable.

### SUMMARY OF THE INVENTION

The present invention relates to an adhesively appliable flexible film comprising, from the application side up, 1) an adhesive layer, 2) a polymeric film having an elastic elongation of at least 120% and 3) a transparent coating composition having an elastic elongation of at least 120%. A strippable liner may be used on the pressure sensitive adhesive layer during manufacture and/or transport of the film.

These flexible films may be applied to flexible surfaces that are exposed to ambient outdoor conditions. Under such conditions the films of this invention can display weatherability and even some degree of dirt repellency while providing a physically durable and attractive decorative marking.

### DETAILED DESCRIPTION OF THE INVENTION

An adhesively appliable flexible covering film comprises, in the following sequence of layers:
1) an adhesive layer,
2) a polymeric film having an elastic elongation of at least 120%, and
3) a transparent coating composition having an elastic elongation of at least 120%.
By combining layers with these properties, the flexible or extensible cover film has been able to withstand repeated flexing and movement when attached to a flexible surface. It was found that flexibility and extensibility in the film layer and coating composition were not alone enough to meet the physical requirements of the use. The described physical elastic elongation properties were found to be preferred for crack resistance of the article. The film should be tough and the coating should be tough and dirt resistant. The film should be resistant to change in physical properties from the migration of plasticizers from other surfaces or materials.

The adhesive composition is preferably a pressure-sensitive adhesive. The benefit of a pressure-sensitive adhesive is its natural flexibility tolerance and elongation properties. As a class, these types of adhesives tend to perform well in the practice of the present invention. These types of adhesives are also easily applied to the covering and enable the flexible covering film to be easily applied.

Pressure-sensitive adhesives are art recognized as a standard class of materials. These are adhesives which in dry (substantially solvent free except for residual solvent) form are aggressively and permanently tacky at room temperature (e.g. 15°to 25°C) and firmly adhere to a variety of dissimilar surfaces upon mere contact without the need for more than manual pressure. They require no activation by water, solvent or heat in order to exert a strong adhesive holding force towards such materials as paper, cellophane, glass, plastic, wood and metals. They have a sufficiently cohesive holding and elastic nature so that, despite their aggressive tackiness, they can be handled with the fingers and removed from smooth surfaces without leaving a substantial residue (cf. Test Methods for Pressure-Sensitive Tapes, 6th Ed., Pressure Sensitive Tape Council, 1953). Pressure-sensitive adhesives and tapes are well known, and the wide range and balance of properties desired in such adhesives has been well analyzed (cf. U.S. Pat. No. 4,374,883; and "Pressure-Sensitive Adhesives" in *Treatise on Adhesion and Adhesives* Vol. 2, "Materials", R.I. Patrick, Ed., Marcel Dekker, Inc., N.Y., 1969). The various materials and compositions useful as pressure-sensitive adhesives are available commercially and are thoroughly discussed in the literature (e.g., Houwink and Salomon, *Adhesion and Adhesives*, Elsevier Publ. Co., Amsterdam, Netherlands, 1967; Handbook of Pressure-Sensitive Adhesive Technology, Donates Satas, Ed., VanNostrand Reinhold Co., N.Y., 1982).

Pressure-sensitive adhesives are generally chemically composed of rubber-resin materials, acrylic resins, polyurethane resins, silicone resins, and the like. Amongst the various patent literature describing compositions and improvements in pressure-sensitive adhesive formulations are Reissue U.S. Pat. Nos. 24,906; 2,652,351; 3,740,366; 3,299,010; 3,770,708; 3,701,758; 3,922,464; 3,931,087; 4,012,560; 4,077,926; 4,387,172; 4,418,120; 4,629,663; and the like. These classes of rubber resin, acrylic, silicone, and polyurethane pressure-sensitive adhesives as well as any other pressure-sensitive adhesives are generally useful in the present invention.

Preferred classes of low tack pressure-sensitive adhesives are particularly described in U.S. Patent Applications Serial Nos. 07/513,679 (filed April 24, 1990) corresponding to EP-A-454 426 and 07/513,680 (filed April 24, 1990) corresponding to EP-A-454 413. These adhesives comprise either 10 to 99% by weight of an acrylic latex adhesive and 1 to 90% of a heat-activatable urethane latex adhesive. The preferred latex adhesive comprises from 84 to 100 parts of an acrylic acid ester of a nontertiary alcohol (with an average of 2 to 12 carbon atoms in the alcohol alkyl groups) and 16 to 0 parts of an ethylenically unsaturated copolymerizable monomer. More preferably the acrylic latex is an aqueous emulsion having 99 to 84 parts by weight of monomer selected from alkyl acrylates and blends of alkylacrylates (e.g., 50 to 90% of ethylacrylate and 50 to 10% by weight of n-butyl acrylate). The heat-activatable component may be commercially supplied as, for example, a heat activated latex such as a polyester-polyurethane latex (e.g., BAYBOND™ 402A from Mobay). These pressure sensitive adhesives are also plasticizer resistant. The absorption of plasticizers from surfaces to which they are adhered tends to have little effect on the properties of the adhesive. Although the preferred adhesive contains a thermally activatable component, the adhesive acts as a positionable pressure-sensitive adhesive and can be applied to surfaces such as flexible, vinyl coated scrim using hand pressure alone.

Non-pressure-sensitive adhesives, thermal adhesives and solvent activatable adhesives may be used if they can display required elastic elongation properties (i.e., at least 120%). They are, however, less preferred embodiments than pressure-sensitive adhesives because of their more difficult application and greater tendency for bubbles.

The flexible polymeric film having an elastic elongation of at least 120% may be selected from amongst any of the chemical materials which can provide these properties, including elastomers, polyesters, polyethers, polyurethane, silicone elastomers, and modified or blended polymeric elastomers. Elastomers are preferred and polyurethane elastomers are more preferred. Plasticizer resistance in this film is a particularly desirable property. The elastomeric film or sheet may be formed by any procedure such as casting, molding, extruding, coating, stripping, etc. The film may be clear or contain colorants therein or thereon. This can be done with coatings, inks, dyes, or having the film pigmented. The urethane elastomer may be a polyurethane latex and may be modified with resins such as melamine-formaldehyde to adjust its physical properties. Although an elastic elongation of at least 120% is required, it is desirable for the film alone to exhibit an elastic elongation of at least 250%. It is preferred to have the film display an elastic elongation of at least 300% or even 350%. In determining elongation percentages, a film having a unit length of one would be elastically stretched to a length of 2.5 to display an elastic elongation of 150%. Films having these kinds of properties are commercially available or can be readily manufactured by those skilled in the art.

The polymeric film layer of the present invention preferably comprises a polyurethane material, and more preferably an aliphatic polyurethane material. These materials usually comprise polymers having both "hard" and "soft" segments, as is well understood in the art. This characteristic adds particular benefits to the present invention by increasing the plasticizer tolerance of those layers. Polyurethanes tend to maintain their physical properties because the plasticizer mainly affects the soft segments and may not affect the properties contributed to the polymer by the hard segments.

The polyurethanes also have much better elastic elongation than do vinyl films presently used for similar products. Vinyl films traditionally crack easily, are subject to non-elastic elongation, and wrinkle due to swelling of the plasticizer and absorption of plasticizer. Typically they may inelastically elongate between 100-300%. The protective coating which is an essential part of the present invention must also have an elastic elongation of at least 120%. It is preferred that the material have an elastic elongation of at least 170% and more preferred that it display an elastic elongation of at least 200%. This coating is translucent or transparent, the latter of course being preferred. The coating is desirably applied without any solvent present which would attack the underlying film layer. This can be done by either selection of appropriate solvents, the use of solventless coating compositions, or the use of a barrier layer between the film and the coating. It is preferred that the protective top coat is a clear polyurethane composition such as those shown in U.S. Patent Nos. 3,939,126; 4,066,582; 4,116,786; 4,131,602; 4,192,762; 4,212,899 and Re. 30,212. These polyurethanes include radiation or thermally curable urethane materials including acryloyl terminated urea-urethanes, acrylate-capped polyether urethanes and polysiloxanes, acrylated polyurethanes, and blends.

Other coating compositions such as flexible silicone elastomers may also be used as the top coat if the elastic elongation properties can be met. The polyurethane top coat described is preferred because of its wide range of desirable properties, including weatherability and dirt resistance.

The preferred polyurethane clear coat compositions comprise reaction products of polyisocyanates and hydroxylamines, oligomeric polyacrylates blended with nitrocellulose, a blend of acrylate-capped polyether urethane and low molecular weight polyfunctional acrylate and polyether-functional polysiloxane, reaction product of an isocyanate terminated urethane with an hydroxyacrylate (or methacrylate), the reaction product of an organic polyisocyanate and an hydroxyalkyl acrylate, polycaprolactone/polyurethane/polyacrylates oligomers, diurethane-diacrylates, urea/urethane/polyacrylate oligomers, and the like.

There may be many variations in the final structure of the present invention to meet the special needs of the final user or the enable the use of different materials in certain layers. As previously stated, the practice of the invention requires at least the three stated layers of the adhesive, elastic film, and elastic clear coat. As is conventional in adhesively attachable film or materials, the use of a strippable carrier of liner on the adhesive layer is desirable. The liner may be a polymeric film, coated film (e.g., PVA coated polyester, polysiloxane coated polyester, etc.), coated paper, etc. The materials of U.S. 4,822,687 are preferred silicone liners for the practice of the present invention.

It is desirable to have the materials within each layer remain within each layer such as with conventional additives like UV absorbers, pigments, placticizers, etc. This can be accomplished by the use of barrier or tie layers, as between the adhesive layers and the film layer and between the film layer and the clear flexible coating. These layers should be firmly bound together to resist delamination. The basic three layer system may therefore involve as many as seven or more layers by having 1) a carrier layer, 2) a release layer on the carrier, 3) the adhesive layer, 4) a barrier layer, 5) the flexible film layer, 6) a second barrier layer, and 7) the flexible top coat layer. There could be other layers such as pigmented or printed layers on the film layer, and primer layers can be used whenever greater adhesion is desired between layers. The barrier layers can also act as priming layers, providing two functions.

These and other aspects of the present invention will be shown in the following examples.

### Example 1:

A linear aliphatic urethane (Desmolac 4125) was coated from solvent (isopropanol, butanol, toluene) on an acrylate coated casting paper and dried in an oven to a dry thickness of 4 microns. A filmcoat composition comprised of 74.66% Baybond™ 402A (an anionic dispersion of an aliphatic polyester urethane polymer in water/toluene), 1.80% Luconyl blue 15:3 (C.I. 74160), 1.64% of a water dipropylene glycol dispersion of TiO₂, 7% thickener premix (50% Collacral™ PU85 (a water soluble polyurethane solution in butyldiglycol and water): 50% water), and 14.9% melamine premix (49.6% water, 50% of a melamine formaldehyde resin, 0.25% of a morpholynium p-tosylate salt in water) was coated over the prime coat, dried 120 seconds at 65°C, and cured 120 seconds at 130°C, to a dry thickness of 50 microns. A Desmolac™ 4125 layer was coated over the filmcoat, to a dry thickness of 4 microns. An adhesive composition comprised of 9.6% water, 3.2% isopropanol, 2.3% Rheology Modifier QR-708 (a nonionic water soluble polyurethane in water and propylene glycol), 29.8% Baybond™ 402A, and 55.1% acrylic latex adhesive (an emulsion polymerization of 80% ethyl acrylate, 16% n-butyl acrylate, 4% acrylic acid) was coated and dried on a silicone coated liner, to a dry thickness of 25 microns. This was laminated to the airside of the film coating described above. The acrylate coated casting paper was stripped from the laminate exposing the first Desmolac™ 4125 coating. Radiation curable clear coat (33% acrylated urethane oligomer, 15% N-vinyl pyrrolidone, 42.9% butylcarbamoylethylacrylate, 3% photoinitiator, 4.1% surfactants, 2% stabilizer) was screen printed on the exposed prime coat and cured at approximately 190 mJ/sqcm and 0.5% oxygen, to a dry thickness of 8 microns. It was noted that upon stretching the composite past the breaking point of the clear coat, first in one direction than in the other, that the clear coat fragments could not be removed from the film with adhesive tape. The stretched product relaxed back to its original dimensions and the cracks in the clear coat were largely unnoticeable. The adhesion of the composite to vinyl coated scrim (Duraskin™) after aging 2 weeks at 65°C was 2.8N/cm. The applied composite was dirt resistant, cleanable, and weather resistant. No cracks visible to the naked eye were visible after double flexing the applied composite 10000 cycles at -30°C per DIN 53359B. The elongation of the clear coat to break was 205%. The elongation of the composite to break was 500%.

### Example 2:

Morthane™ PN3429, a thermoplastic urethane, was compounded with 30% TiO2 or other pigments in a twin screw extruder to produce pigmented pellets. 40 to 75 micron thick film was extruded from the pellets onto a polyolefin casting liner. The air side of the polyurethane film was corona treated and laminated to the adhesive coating described in the above example. The polyolefin casting liner was stripped away and the freshly exposed urethane film surface was screenprinted with the radiation curable clear coat as described above. The performance properties were similar to those described for the first example.

### Example 3:

A filmcoat composition of 76% Baybond™ 402A, 22% by weight TiO₂ as a water dispersion, and 2% thickener premix (50% Collacral™ PU85; 50% water) was coated on a casting paper, corona treated, stripped from the casting paper and simultaneously laminated to an adhesive coating on liner identical to that described in the first example, then clear coated with a radiation curable clear coat identical to that described in the first example. Because no melamine formaldehyde resin was used, the clear coat adhered to the dried urethane latex film without the aid of a prime coat. The properties of the construction were similar to those of the first example.

### Example 4:

An extruded pigmented urethane film was produced as described in Example 2. A two part thermocure urethane clear coat (100 g of 71% of a polyester polyol, 5% UV absorber, 1% antioxidant, 2% surfactant, .03% dibutyl tin dilaurate, 21% butyl cellosolve acetate; 50 g of Desmodur™ N-100, an aliphatic polyisocyanate resin; and 20 g of butyl cellosolve acetate) was screenprinted over the pigmented urethane film and thermally cured. The composite was stripped from the extrusion casting liner and laminated to an adhesive coating on liner identical to that in Example 1. The composite was found to have an elongation to break of 130%, due to the limitations of the clear coat. Cracks initiated in the clear coat propagate into the extruded film, causing complete failure. This example was found to resist dirt and to crack in field applications.

## Claims

1. An adhesively appliable flexible film comprising in sequence:
a) an adhesive layer,
b) a polymeric film having an elastic elongation of at least 120%, and
c) a translucent or transparent coating having an elastic elongation of at least 120%.

2. The flexible film of claim 1 wherein said adhesive layer comprises a pressure-sensitive adhesive layer.

3. The flexible film of claim 1 wherein said adhesive layer comprises a thermal adhesive layer.

4. The flexible film of claim 2 wherein said adhesive layer comprises a blend of an acrylic latex adhesive and a heat-activatable urethane latex adhesive.

5. The flexible film of claim 2 wherein a strippable liner is in contact with said adhesive layer.

6. The flexible film of claim 3 wherein a strippable liner is in contact with said adhesive layer.

7. The flexible film of claim 1 wherein said polymeric film comprises an elastomer.

8. The flexible film of claim 2 wherein said polymeric film comprises an elastomeric urethane.

9. The flexible film of claim 3 wherein said polymeric film comprises an elastomeric urethane.

10. The flexible film of claim 1 wherein said polymeric film comprises a pigmented aliphatic urethane elastomer having an elastic elongation of at least 250%.

11. The flexible film of claim 3 wherein said polymeric film comprises a pigmented urethane elastomer having an elastic elongation of at least 250%.

12. The flexible film of claim 4 wherein said polymeric film comprises a pigmented urethane elastomer having an elastic elongation of at least 250%.

13. The flexible film of claim 1 wherein said polymeric film comprises a urethane latex.

14. The flexible film of claim 2 wherein said polymeric film comprises a urethane latex and melamine-formaldehyde resin.

15. The flexible film of claim 4 wherein said polymeric film comprises a urethane latex and melamine-formaldehyde resin.

16. The flexible film of claim 1 wherein said coating comprises a transparent urethane having an elastic elongation of at least 170%.

17. The flexible film of claim 4 wherein said coating comprises a transparent urethane.

18. The flexible film of claim 4 in which said coating comprises a transparent cured urethane having an elastic elongation of at least 170%.

19. The flexible film of claim 15 in which said coating comprises a transparent cured urethane having an elastic elongation of at least 170%.

20. The flexible film of claim 1 adhered to a flexible sheet material by said adhesive layer.

21. The flexible film of claim 20 wherein said flexible sheet comprises the soft polyvinyl chloride coated siding on a truck.

22. The flexible film of claim 3 wherein there is a barrier or tie layer between said coating and said polymeric film.

23. The flexible film of claim 1 wherein there is a barrier or tie layer between said coating and said polymeric film.

24. The flexible film of claim 1 wherein there is a barrier or tie layer between said adhesive layer and said polymeric film.

25. The flexible film of claim 2 wherein there is a barrier or tie layer between said adhesive layer and said polymeric film.

26. The flexible film of claim 15 wherein there is a barrier or tie layer between said adhesive layer and said polymeric film.

27. The flexible film of claim 19 wherein there is a barrier or tie layer between said adhesive layer and said polymeric film.

28. The flexible film of claim 2 wherein said polymeric film has at least one colorant within the film or on a surface thereof.

29. The flexible film of claim 21 wherein said polymeric film has at least one colorant within the film or on a surface thereof.

30. An adhesively applicable flexible film comprising in sequence:
a) a strippable carrier layer,
b) a solvent resistant pressure sensitive adhesive layer,
c) a polyurethane film layer having an elastic elongation of at least 250%, and
d) a transparent polyurethane coating having an elastic elongation of at least 170%.

## Patentansprüche

1. Flexible Klebefolie, in der
a) eine Klebstoffschicht,
b) eine polymere Feinfolie mit einer elastischen Dehnung von mindestens 120% und
c) ein durchscheinender oder durchsichtiger Überzug mit einer elastischen Dehnung von mindestens 120% aufeinanderfolgen.

2. Flexible Folie nach Anspruch 1, in der die Klebstoffschicht wenigstens teilweise von einer Haftkleberschicht gebildet wird.

3. Flexible Folie nach Anspruch 1, in der die Klebstoffschicht wenigstens teilweise von einer wärmeaktivierbaren Klebstoffschicht gebildet wird.

4. Flexible Folie nach Anspruch 2, in der die Klebstoffschicht wenigstens teilweise aus einem Gemisch aus einem Klebstoff aus einem Acryllatex und einem Klebstoff aus einem wärmeaktivierbaren Urethanlatex besteht.

5. Flexible Folie nach Anspruch 2, in der an der Klebstoffschicht eine abstreifbare Auflage anliegt.

6. Flexible Folie nach Anspruch 3, in der an der Klebstoffschicht eine abstreifbare Auflage anliegt.

7. Flexible Folie nach Anspruch 1, in der die polymere Feinfolie wenigstens teilweise aus einem Elastomer besteht.

8. Flexible Folie nach Anspruch 2, in der die polymere Feinfolie wenigstens teilweise aus einem elastomeren Urethan besteht.

9. Flexible Folie nach Anspruch 3, in der die polymere Feinfolie wenigstens teilweise aus einem elastomeren Urethan besteht.

10. Flexible Folie nach Anspruch 1, in der die polymere Feinfolie wenigstens teilweise aus einem pigmentierten aliphatischen Urethanelastomer mit einer elastischen Dehnung von mindestens 250% besteht.

11. Flexible Folie nach Anspruch 3, in der die polymere Feinfolie wenigstens teilweise aus einem pigmentierten aliphatischen Urethanelastomer mit einer elastischen Dehnung von mindestens 250% besteht.

12. Flexible Folie nach Anspruch 4, in der die polymere Feinfolie wenigstens teilweise aus einem pigmentierten aliphatischen Urethanelastomer mit einer elastischen Dehnung von mindestens 250% besteht.

13. Flexible Folie nach Anspruch 1, in der die polymere Folie wenigstens teilweise aus einem Urethanlatex besteht.

14. Flexible Folie nach Anspruch 2, in der die polymere Feinfolie einen Urethanlatex und ein Melaminformaldehydharz enthält.

15. Flexible Folie nach Anspruch 4, in der die polymere Feinfolie einen Urethanlatex und ein Melaminformaldehydharz enthält.

16. Flexible Folie nach Anspruch 1, in der der genannte Überzug wenigstens teilweise aus einem durchsichtigen Urethan mit einer elastischen Dehnung von mindestens 170% besteht.

17. Flexible Folie nach Anspruch 4, in der der genannte Überzug wenigstens teilweise aus einem durchsichtigen Urethan besteht.

18. Flexible Folie nach Anspruch 4, in der der genannte Überzug wenigstens teilweise aus einem durchsichtigen gehärteten Urethan mit einer elastischen Dehnung von mindestens 170% besteht.

19. Flexible Folie nach Anspruch 15, in der der genannte Überzug wenigstens teilweise aus einem durchsichtigen gehärteten Urethan mit einer elastischen Dehnung von mindestens 170% besteht.

20. Flexible Folie nach Anspruch 1, die mit der Klebstoffschicht an flexiblem Blattmaterial klebt.

21. Flexible Folie nach Anspruch 20, bei der das genannte flexible Blatt wenigstens teilweise aus dem mit Weichpolyvinylchlorid überzogenen Verdeck eines Lastkraftwagens besteht.

22. Flexible Folie nach Anspruch 3, in der zwischen dem genannten Überzug und der genannten polymeren Feinfolie eine Sperr- oder Bindeschicht vorgesehen ist.

23. Flexible Folie nach Anspruch 1, in der zwischen dem genannten Überzug und der genannten polymeren Feinfolie eine Sperr- oder Bindeschicht vorgesehen ist.

24. Flexible Folie nach Anspruch 1, in der zwischen dem genannten Überzug und der genannten polymeren Feinfolie eine Sperr- oder Bindeschicht vorgesehen ist.

25. Flexible Folie nach Anspruch 2, in der zwischen dem genannten Überzug und der genannten polymeren Feinfolie eine Sperr- oder Bindeschicht vorgesehen ist.

26. Flexible Folie nach Anspruch 15, in der zwischen dem genannten Überzug und der genannten polymeren Feinfolie eine Sperr- oder Bindeschicht vorgesehen ist.

27. Flexible Folie nach Anspruch 19, in der zwischen dem genannten Überzug und der genannten polymeren Feinfolie eine Sperr- oder Bindeschicht vorgesehen ist.

28. Flexible Folie nach Anspruch 2, in der in der Feinfolie oder auf einer Oberfläche mindestens ein färbender Stoff vorgesehen ist.

29. Flexible Folie nach Anspruch 21, in der in der Feinfolie oder auf einer Oberfläche mindestens ein färbender Stoff vorgesehen ist.

30. Flexible Klebefolie, in der
a) eine abstreifbare Trägerschicht,
b) eine lösungsmittelbeständige Haftkleberschicht,
c) eine aus einer Polyurethanfeinfolie bestehende Schicht mit einer elastischen Dehnung von mindestens 250% und
d) ein durchsichtiger Polyurethanüberzug mit einer elastischen Dehnung von mindestens 170%
aufeinanderfolgen.

## Revendications

1. Une feuille souple à application par adhérence, comportant en séquence:
a) une couche adhésive,
b) une pellicule polymère présentant un allongement élastique d'au moins 120%, et
c) un revêtement translucide ou transparent, présentant un allongement élastique d'au moins 120%.

2. La feuille souple de la revendication 1, dans laquelle la couche adhésive comporte une couche adhésive sensible à la pression.

3. La feuille souple de la revendication 1, dans laquelle la couche adhésive comporte une couche thermoadhésive.

4. La feuille souple de la revendication 2, dans laquelle ladite couche adhésive comporte un mélange d'un adhésif de type latex acrylique et d'un adhésif de type latex uréthane, susceptible d'être activé par la chaleur.

5. La feuille souple de la revendication 2, dans laquelle une couche de protection susceptible d'être pelée est en contact avec ladite couche adhésive.

6. La feuille souple de la revendication 3, dans laquelle une couche protectrice pelable est en contact avec ladite couche adhésive.

7. La feuille souple de la revendication 1, dans laquelle ladite pellicule polymère comprend un élastomère.

8. La feuille souple de la revendication 2, dans laquelle ladite pellicule polymère comporte un uréthane élastomère.

9. La feuille souple de la revendication 3, dans laquelle ladite pellicule polymère comporte un uréthane élastomère.

10. La feuille souple de la revendication 1, dans laquelle ladite pellicule polymère comporte un élastomère de type uréthane aliphatique, pigmenté, qui présente un allongement élastique d'au moins 250%.

11. La feuille souple de la revendication 3, dans laquelle ladite pellicule polymère comporte un élastomère de type uréthane pigmenté présentant un allongement élastique d'au moins 250%.

12. La feuille souple de la revendication 4, dans laquelle ladite pellicule polymère comporte un élastomère de type uréthane pigmenté, qui présente un allongement élastique d'au moins 250%.

13. La feuille souple de la revendication 1, dans laquelle ladite pellicule polymère comporte un latex d'uréthane.

14. La feuille souple de la revendication 2, dans laquelle ladite pellicule polymère comporte un latex uréthane et une résine mélamine-formaldéhyde.

15. La feuille souple de la revendication 4, dans laquelle ladite pellicule polymère comporte un latex d'uréthane et une résine mélamine-formaldéhyde.

16. La feuille souple de la revendication 1, dans laquelle ledit revêtement comporte un uréthane transparent ayant un allongement élastique d'au moins 170%.

17. La feuille souple de la revendication 4, dans laquelle ledit revêtement comporte un uréthane transparent.

18. La feuille souple de la revendication 4, dans laquelle ledit revêtement comporte un uréthane transparent durci, qui présente un allongement élastique d'au moins 170%.

19. La feuille souple de la revendication 15, dans laquelle ledit revêtement comporte un uréthane durci transparent, qui présente un allongement élastique d'au moins 170%.

20. La feuille souple de la revendication 1, qui est fixée par adhésion au matériau de la feuille souple par ladite couche adhésive.

21. La feuille souple de la revendication 20, dans laquelle ladite feuille souple comporte un bardage revêtu de polychlorure de vinyle souple sur un camion.

22. La feuille souple de la revendication 3, dans laquelle il existe une couche barrière ou de liaison entre ledit revêtement et ladite pellicule polymère.

23. La feuille souple de la revendication 1, dans laquelle il existe une couche barrière ou de liaison entre ledit revêtement et ladite pellicule polymère.

24. La feuille souple de la revendication 1, dans laquelle il existe une couche barrière ou de liaison entre ledit revêtement et ladite pellicule polymère.

25. La feuille souple de la revendication 2, dans laquelle il existe une couche barrière ou de liaison entre ledit revêtement et ladite pellicule polymère.

26. La feuille souple de la revendication 15, dans laquelle il existe une couche barrière ou de liaison entre ledit revêtement et ladite pellicule polymère.

27. La feuille souple de la revendication 19, dans laquelle il existe une couche barrière ou de liaison entre ledit revêtement et ladite pellicule polymère.

28. La feuille souple de la revendication 2, dans laquelle ladite pellicule polymère comporte au moins un colorant à l'intérieur de la pellicule ou sur une face de celle-ci.

29. La feuille souple de la revendication 21, dans laquelle ladite pellicule polymère comporte au moins un colorant à l'intérieur de la pellicule ou sur une face de celle-ci.

30. Une feuille souple à application par adhérence, comportant, en séquence:
a) une couche support pelable,
b) une couche adhésive sensible à la pression et résistant aux solvants,
c) une couche de pellicule de polyuréthane qui présente un allongement élastique d'au moins 250%, et
d) une couche transparente en polyuréthane, qui présente un allongement élastique d'au moins 170%.
